# NEUE EUROPÄISCHE PATENTSCHRIFT

(11) **EP 2 759 436 B2**
(45) Veröffentlichungstag und Bekanntmachung des Hinweises auf die Entscheidung über den Einspruch: **20.06.2018**
(45) Hinweis auf die Patenterteilung: 13.05.2015
(21) Anmeldenummer: 13192514.1
(22) Anmeldetag: 12.11.2013
(51) Int. Cl.: B60K 15/035

(54) **Entlüftungsventil**
Ventilation valve
Ventilateur

(30) Priorität: 25.01.2013 DE 102013201237
(43) Veröffentlichungstag der Anmeldung: 30.07.2014
(73) Patentinhaber: VERITAS AG, 63571 Gelnhausen (DE)
(72) Erfinder: Schindler, Thomas, 63768 Hösbach (DE); STEHLE, Alexander, 55116 Mainz (DE)
(74) Vertreter: Patentship Patentanwaltsgesellschaft mbH

(56) Entgegenhaltungen:
- EP-A2- 0 845 624
- EP-A2- 0 997 674
- EP-A2- 1 236 605
- WO-A1-97/22797
- WO-A1-2011/001256
- DE-A1- 4 121 324
- DE-A1- 4 244 113
- DE-A1-102005 043 745
- DE-A1-102006 049 876
- GB-A- 2 257 694
- US-A- 3 650 256
- US-A- 4 378 815
- US-A- 5 462 100
- US-A- 5 678 590
- US-A- 5 809 976
- US-A- 5 832 950
- US-A- 5 878 991
- US-A- 6 085 771
- US-A1- 2002 017 281
- US-A1- 2004 007 262
- US-A1- 2004 144 444
- US-A1- 2008 236 672
- US-A1- 2009 107 561
- US-A1- 2011 005 629
- US-A1- 20030 098 063

## Beschreibung

Die vorliegende Erfindung betrifft ein Entlüftungsventil zum Entlüften eines Flüssigkeitstanks in einem Kraftfahrzeug.

Beim Betanken eines Flüssigkeitstanks wird die Luft im Inneren des Flüssigkeitstanks durch die eingefüllte Flüssigkeit verdrängt. Um die verdrängte Luft aus dem Flüssigkeitstank abzuführen, werden spezielle Entlüftungsventile verwendet.

Die Druckschrift EP 2 008 857 A1 beschreibt beispielsweise einen Kraftstofftank für ein Kraftfahrzeug mit einem ein Ventilgehäuse und eine Entlüftungsöffnung aufweisenden Entlüftungsventil, das in einer oberen Öffnung des Tanks eingesetzt ist und in das Tankinnere hineinragt und bei dem die Wand des Ventilgehäuses von einer Wandöffnung durchsetzt ist. Im Ventilgehäuse befindet sich ein zwischen einer Ruhestellung und einer Schließstellung beweglicher Schwimmer.

Bei dieser Art von Flüssigkeitstank entsteht das Problem, dass das in den Tank hineinragende Entlüftungsventil Kräften ausgesetzt ist, die durch eine sich bewegende Flüssigkeit bei einer Bewegung des Fahrzeugs verursacht werden. Befinden sich in der Flüssigkeit Gegenstände, wie beispielsweise Eisschollen in einem Tank für eine wässrige Harnstofflösung, treffen diese bei einer Bewegung des Fahrzeugs auf das hervorstehende Entlüftungsventil und beschädigen dieses.

Es ist die der Erfindung zugrundeliegende Aufgabe, die Beschädigung eines Entlüftungsventils bei einer Bewegung des Fahrzeugs zu verhindern.

Diese Aufgabe wird durch den Gegenstand mit den Merkmalen nach dem unabhängigen Anspruch gelöst. Vorteilhafte Ausführungsformen sind Gegenstand der abhängigen Ansprüche, der Beschreibung und der Figuren.

Gemäß einem Aspekt wird die Aufgabe durch ein Entlüftungsventil zum Entlüften eines Flüssigkeitstanks in einem Kraftfahrzeug bei einer Betankung über eine Entlüftungsöffnung gelöst, mit einem Schwimmer in einer Schwimmerkammer zum Verschließen der Entlüftungsöffnung und einem Leitungsanschluss zum Zuführen von Flüssigkeit aus dem Flüssigkeitstank zur Schwimmerkammer. Der Flüssigkeitstank ist beispielsweise ein Tank für eine wässrige Harnstofflösung.

Durch den Leitungsanschluss wird der technische Vorteil erreicht, dass das Entlüftungsventil außerhalb des Flüssigkeitstanks angeordnet werden kann und eine Beschädigung des Entlüftungsventils durch eine sich bewegende Flüssigkeit verhindert wird. Daneben wird die Funktion des Entlüftungsventils nicht durch Bewegungen der Flüssigkeit im Flüssigkeitstank gestört.

In einer vorteilhaften Ausführungsform des Entlüftungsventils umfasst der Schwimmer einen becherförmigen Schwimmerkörper. Dadurch wird beispielsweise der technische Vorteil erreicht, dass der Schwimmer mit geringem Aufwand und Gewicht hergestellt werden kann und sich im Inneren des Schwimmerkörpers eine Luftblase bildet, die den Schwimmer beim Eintritt von Flüssigkeit in die Schwimmerkammer gegen die Entlüftungsöffnung drückt.

Der Schwimmer umfasst eine Schwimmerdichtung zum Abdichten der Entlüftungsöffnung. Dadurch wird beispielsweise der technische Vorteil erreicht, dass die Dichtwirkung des Entlüftungsventils verbessert wird.

In einer weiteren vorteilhaften Ausführungsform des Entlüftungsventils umfasst der Schwimmer einen Dichtungsträger zum Befestigen der Schwimmerdichtung. Dadurch wird beispielsweise der technische Vorteil erreicht, dass die Schwimmerdichtung auf einfache Weise an dem Schwimmer befestigt werden kann.

In einer weiteren vorteilhaften Ausführungsform des Entlüftungsventils ist der Dichtungsträger mit einem Bewegungsfreiraum an dem Schwimmer befestigt. Dadurch wird beispielsweise der technische Vorteil erreicht, dass die Schwimmerdichtung mit einem Spiel an dem Schwimmer befestigt ist und die Entlüftungsöffnung verschließt, ohne zu verkanten.

Die Schwimmerdichtung umfasst eine Dichtungsöffnung zum Durchlassen von Luft aus der Schwimmerkammer. Dadurch wird beispielsweise der technische Vorteil erreicht, dass ein Lösen der Schwimmerdichtung aus einer geschlossenen Position erleichtert wird.

Der Schwimmer umfasst einen Dorn zum Verschließen der Dichtungsöffnung. Dadurch wird beispielsweise der technische Vorteil erreicht, dass ein Austritt von Flüssigkeit bei ansteigendem Flüssigkeitspegel innerhalb der Schwimmerkammer verhindert wird, wohingegen bei absinkendem Flüssigkeitspegel innerhalb der Schwimmerkammer die Dichtungsöffnung freigeben wird, so dass ein Luftdurchtritt erreicht wird und ein Überdruck abgebaut werden kann.

In einer weiteren vorteilhaften Ausführungsform des Entlüftungsventils umfasst die Schwimmerkammer einen Führungseinsatz zum Führen des Schwimmers. Dadurch wird beispielsweise der technische Vorteil erreicht, dass ein Verklemmen des Schwimmers verhindert wird.

In einer weiteren vorteilhaften Ausführungsform des Entlüftungsventils bildet der Führungseinsatz einen Anschlag für den Schwimmer. Dadurch wird beispielsweise der technische Vorteil erreicht, dass sich der Schwimmer in der geöffneten Stellung in einer exakt definierten Lage befindet, so dass ein Schließen der Entlüftungsöffnung sichergestellt werden kann.

Die Entlüftungsöffnung ist an einer Austrittseite von einer elastischen Membran abgedeckt. Die elastische Membran ist derart angeordnet, dass diese bei einem Überdruck im Entlüftungsventil einen Luftspalt erzeugt, aus dem die Luft aus dem Entlüftungsventil austreten kann. Die elastische Membran umfasst Lüftungsschlitze. Bei einem Unterdruck im Ventilinneren kann zum Zwecke eines Druckausgleichs die Umgebungsluft über die Luftschlitze in der Membran in das Entlüftungsventil eintreten. Hierdurch wird ein Luftaustausch mit dem Ventilinneren auf ein Minimum reduziert, so dass beispielsweise eine Austrocknung und eine damit verbundene Kristallisation von Harnstoff verhindert werden. Auf diese Weise kann die Funktionalität des Entlüftungsventils sichergestellt werden.

Die elastische Membran ist kreisförmig. Dadurch wird beispielsweise der technische Vorteil erreicht, dass ein zu allen Seiten offener Luftspalt erzeugt wird und die Luft mit einer hohen Rate aus dem Entlüftungsventil austreten kann.

Die elastische Membran ist in der Mitte der Entlüftungsöffnung befestigt. Dadurch wird beispielsweise ebenfalls der technische Vorteil erreicht, dass ein vorliegender Überdruck alle Seiten der elastischen Membran anheben kann.

In einer weiteren vorteilhaften Ausführungsform des Entlüftungsventils umfasst das Entlüftungsventil eine Schutzkappe zum Verhindern eines Eindringens von Schmutzpartikeln in die Entlüftungsöffnung. Dadurch wird beispielsweise ebenfalls der technische Vorteil erreicht, dass ein Eintritt vom Schmutz verhindert wird und die Funktionalität des Entlüftungsventils auch unter schwierigen Außenbedingungen aufrechterhalten wird.

In einer weiteren vorteilhaften Ausführungsform des Entlüftungsventils weist die Schwimmerkammer eine Zylinderform auf. Dadurch wird beispielsweise der technische Vorteil erreicht, dass die Schwimmerkammer symmetrisch ist und mit geringem Aufwand hergestellt werden kann.

Das Entlüftungsventil umfasst eine kreisförmige Dichtungsplatte, in der die Entlüftungsöffnung zentral angeordnet ist. Dadurch wird beispielsweise der technische Vorteil erreicht, dass sich ein symmetrischer Aufbau des Entlüftungsventils realisieren lässt.

In einer weiteren vorteilhaften Ausführungsform des Entlüftungsventils umfasst das Entlüftungsventil eine Strömungsplatte zum Brechen eines in die Schwimmerkammer eintretenden Flüssigkeitsstrahles. Dadurch wird beispielsweise der technische Vorteil erreicht, dass der Schwimmer nicht durch einen gerichteten Flüssigkeitsstrahl betätigt wird, der durch den Leitungsanschluss eintritt, ohne dass die Schwimmerkammer zuvor gefüllt worden ist.

In einer weiteren vorteilhaften Ausführungsform des Entlüftungsventils umfasst das Entlüftungsventil einen Nebenstutzen für einen weiteren Luftaustausch. Dadurch wird beispielsweise der technische Vorteil erreicht, dass das Entlüftungsventil für eine weitere Be- und Entlüftungsaufgabe verwendet werden kann.

Ausführungsbeispiele der Erfindung sind in den Zeichnungen dargestellt und werden im Folgenden näher beschrieben.

Es zeigen:
- Fig. 1: eine perspektivische Ansicht und eine Explosionsansicht des Entlüftungsventils;
- Fig. 2: eine Querschnittsansicht des Entlüftungsventils mit geöffneter Entlüftungsöffnung;
- Fig. 3: eine Querschnittsansicht des Entlüftungsventils mit geschlossener Entlüftungsöffnung; und
- Fig. 4: eine Querschnittsansicht des Entlüftungsventils mit geschlossener Entlüftungsöffnung, in der eine Dichtungsöffnung in einer Schwimmerdichtung freigegeben ist.

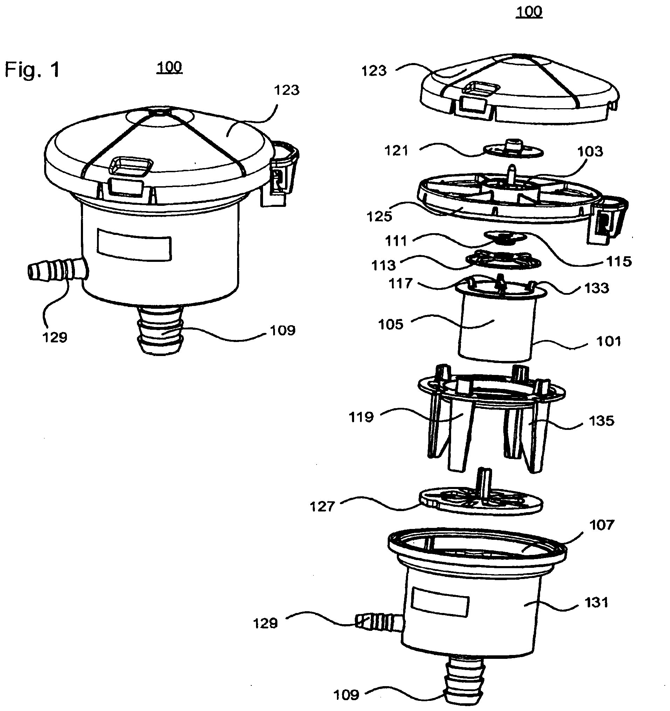

Fig. 1 zeigt eine perspektivische Ansicht und eine Explosionsansicht des Entlüftungsventils 100. Das Entlüftungsventil 100 wird in der Tankentlüftungsleitung eingesetzt. Das Entlüftungsventil 100 ermöglicht, dass bei Überdruck, beispielsweise entstehend durch Betankung oder Luftdruckunterschiede, das zu verdrängende Gasvolumen definiert aus dem Flüssigkeitstank entweicht. Darüber hinaus wird durch das Entlüftungsventil 100 eine Abschaltung/Beendigung einer Zapfventilautomatik bei einer definierten Füllmenge bewirkt.

Beim Betanken eines Flüssigkeitstanks wird die Luft im Flüssigkeitstank durch die eingefüllte Flüssigkeit verdrängt. Wird der Flüssigkeitstank mit einer hohen Befüllrate, von beispielsweise 40l/min befüllt, strömt die verdrängte Luft im Wesentlichen mit der gleichen Rate aus dem Flüssigkeitstank. Um die jeweilige Befüllrate zu ermöglichen, sollte das Entlüftungsventil 100 für die verwendete Befüllrate ausgelegt sein.

Das Entlüftungsventil 100 umfasst ein becherförmiges Gehäuseteil 131, in dem ein Stutzen als Leitungsanschluss 109 zum Zuführen von Flüssigkeit aus dem Flüssigkeitstank zu dem Entlüftungsventil und ein Nebenstutzen 129 für einen weiteren Luftaustausch gebildet sind, beispielsweise bei einer Betankung des Flüssigkeitstanks mit einer aufgeschraubten Flasche. Beim regulären Betanken des Flüssigkeitstanks tritt Flüssigkeit über eine am Leitungsanschluss 109 angeschlossene Flüssigkeitsleitung in das Entlüftungsventil 100 ein. Das Gehäuseteil 131 bildet in Inneren eine zylindrische Schwimmerkammer 107.

Durch den Leitungsanschluss 109 wird der Vorteil erreicht, dass das Entlüftungsventil 100 außerhalb des Flüssigkeitstanks verwendet werden kann. Eine Beschädigung oder eine Funktionsbeeinträchtigung des Entlüftungsventils 100 durch sich im Flüssigkeitstank bewegende Flüssigkeit kann dadurch verhindert werden.

Im Inneren des Entlüftungsventils 100 befindet sich ein Schwimmer 101 mit einem Schwimmerkörper 105, der beim Eintritt der Flüssigkeit in das Entlüftungsventil 100 eine Entlüftungsöffnung 103 schließt. Hierdurch wird ein erstes Ventil im Inneren des Entlüftungsventils 100 realisiert.

Der Schwimmerkörper 105 ist ebenfalls becherförmig ausgebildet und befindet sich im Inneren des Entlüftungsventils 100. Durch die nach unten hin geöffnete Becherform bildet sich im Inneren des Schwimmerkörpers 105 beim Eintritt von Flüssigkeit ein Lufteinschluss, der den Schwimmerkörper 105 nach oben aufschwimmen lässt und gegen die Entlüftungsöffnung 103 drückt. In diesem Fall tritt keine Luft mehr über die Entlüftungsöffnung 103 aus dem Entlüftungsventil 100 aus.

Sinkt der Flüssigkeitspegel im Inneren des Entlüftungsventils 100 ab, bewegt sich der Schwimmer 101 erneut nach unten und gibt die Entlüftungsöffnung 103 frei. In diesem Fall kann die Luft wieder über die Entlüftungsöffnung 103 aus dem Entlüftungsventil 100 austreten. Beim Betanken tritt die von der Flüssigkeit im Inneren des Tanks verdrängte Luft solange aus, bis Flüssigkeit in die Flüssigkeitsleitung eintritt, die zu dem Entlüftungsventil 100 führt und den Schwimmer 101 in die Schließstellung bringt.

An der Oberseite des Schwimmers 101 ist eine Schwimmerdichtung 111 zum Abdichten der Entlüftungsöffnung 103 angeordnet. Die Schwimmerdichtung 111 ist tellerförmig ausgebildet und besteht aus einem elastischen Material, wie beispielsweise Silikon. Die Schwimmerdichtung 111 legt sich in der Schließstellung auf die gegenüberliegende Randfläche der Entlüftungsöffnung 103 und verschließt die Entlüftungsöffnung 103 derart, dass keine Luft aus dem Entlüftungsventil 100 entweichen kann.

Die Schwimmerdichtung 111 ist an dem Schwimmerkörper 105 über einen Dichtungsträger 113 befestigt. Der Dichtungsträger 113 weist eine mittige, runde Einsatzöffnung auf, in die die Schwimmerdichtung 111 eingesetzt wird. Zu diesem Zweck weist die tellerförmige Schwimmerdichtung 111 eine wulstförmige Auswölbung auf, die in die Einsatzöffnung eingedrückt wird. Zur Befestigung des Dichtungsträgers 101 sind an der Oberseite des Schwimmerkörpers 105 vier Befestigungsarme 133 gebildet, die in den Dichtungsträger 113 eingreifen. Dabei sind die Befestigungsarme 133 derart ausgebildet, dass der Dichtungsträger 113 gegenüber dem Schwimmerkörper 105 ein gewisses Spiel aufweist und sich innerhalb des Spiels frei bewegen kann.

Das Spiel bewirkt einen sich in Längsrichtung erstreckenden Bewegungsfreiraum des Dichtungsträgers 113 mit der Schwimmerdichtung 111. In der Mitte der Schwimmerdichtung 111 ist eine Dichtungsöffnung 115 zum Durchlassen von Luft aus oder in die Schwimmerkammer 107 gebildet. Gegenüber der Dichtungsöffnung 115 ist auf der Oberseite des Schwimmerkörpers 105 ein Dorn 117 gebildet. In der Schließstellung wird der Dorn 117 auf die Dichtungsöffnung 115 gedrückt, so dass ein Luftaustritt verhindert wird.

Sinkt der Flüssigkeitspegel in der Schwimmerkammer 107 ab, so sinkt der Schwimmerkörper 105 aufgrund seines Eigengewichtes ebenfalls nach unten sofern kein definierter Überdruck im Schwimmergehäuse ansteht. Dabei wird aufgrund des Spiels des Dichtungsträgers 113 zunächst der Dorn 117 von der Dichtungsöffnung 115 weg bewegt, so dass die Dichtungsöffnung 115 frei gegeben wird und Luft durch die Dichtungsöffnung 115 hindurchtreten kann. Dadurch kann ein Überdruck in der Schwimmerkammer 107 abgebaut werden, der eventuell verhindern würde, dass sich das Entlüftungsventil 100 wieder öffnet.

Danach wird beim weiteren Absinken des Schwimmerkörpers 105 die Schwimmerdichtung 111 zusammen mit dem Dichtungsträger 113 nach unten bewegt, so dass die Entlüftungsöffnung 103 wieder vollständig freigegeben wird. Durch diese Ausgestaltung lässt sich ein Verbleiben des Schwimmers 101 in der Schließstellung verhindern.

Der zylindrische Schwimmerkörper 105 des Schwimmers 101 ist im Inneren der Schwimmerkammer 107 mithilfe eines Führungseinsatzes 119 gelagert. Der Führungseinsatz 119 ist ein Kunststoffformteil, dass in das Innere der Schwimmerkammer 107 eingesetzt wird und die Bewegung des Schwimmerkörpers 105 unterstützt.

Der Führungseinsatz 119 stabilisiert den Schwimmer 101 in seitlicher Richtung gegenüber der Innenwand des Gehäuseteils 131 und ermöglicht eine Bewegung des Schwimmers 101 in Längsrichtung. Durch den Führungseinsatz 119 wird eine leichtgängige und verklemmungsfreie Bewegung des Schwimmerkörpers 105 im Inneren der Entlüftungskammer 107 ermöglicht. Zusätzlich bildet der Führungseinsatz 119 einen Anschlag für den Schwimmerkörper 105, so dass dieser bei einer Öffnungsbewegung an einer vorgegebenen Position zum Stehen kommt.

Der Führungseinsatz 119 umfasst mindestens vier Einsatzbeine 135, die sich im Inneren der Schwimmerkammer 107 in Längsrichtung erstrecken. Im zusammengesetzten Zustand des Entlüftungsventils 100 liegen die Einsatzbeine auf einer Strömungsplatte 127 auf. Dadurch wird der Vorteil erreicht, dass der Schwimmerkörper 105 zu jeder Seite hin durch eines der Einsatzbeine 135 geführt wird. Im Allgemeinen kann die Zahl der Einsatzbeine 135 auch andere Werte annehmen.

Die Strömungsplatte 127 dient zum Brechen eines in die Schwimmerkammer 107 eintretenden Flüssigkeitsstrahles. Dadurch wird verhindert, dass der eintretende Flüssigkeitsstrahl direkt auf den Schwimmerkörper 105 trifft und diesen durch seinen mechanischen Impuls in die Schließstellung bewegt. Zu diesem Zweck sind in der Strömungsplatte 127 mehrere sektorförmige Öffnungen gebildet, durch die die Flüssigkeit in die Schwimmerkammer 107 hineinströmen kann. In der Mitte der Strömungsplatte 127 befindet sich keine Öffnung, so dass ein direktes Auftreffen des Flüssigkeitsstrahls auf den Schwimmerkörper 105 verhindert wird. Bei einem Eintritt der Flüssigkeit verhindert die Strömungsplatte 127 daneben eine Verwirbelung der Flüssigkeit.

Der über den Leitungsanschluss 109 eintretende Flüssigkeitsstrahl trifft in der Mitte der Strömungsplatte 127 auf. An dieser Stelle weist die Strömungsplatte keine Öffnung auf, so dass ein ungehindertes Eintreten des Flüssigkeitsstrahls in die Schwimmerkammer 107 verhindert wird. Daneben umfasst die Strömungsplatte 127 eine Anzahl von Federbeinen, die die Strömungsplatte 127 federnd auf dem Boden des Gehäuseteils 131 lagern. Wird das Entlüftungsventil 100 zusammengefügt und verschweißt, wird über die Strömungsplatte 127 durch das Zusammendrücken der Federbeine ein Anpressdruck auf den Führungseinsatz 119 ausgeübt, so dass dieser ohne Spiel zwischen der Strömungsplatte 127 und einer Dichtungsplatte 125 eingeklemmt ist.

Die kreisförmige Dichtungsplatte 125 umfasst die Entlüftungsöffnung 103. Die Dichtungsplatte 125 wird von oben auf das becherförmige Gehäuseteil 131 gesetzt und verschweißt, so dass die Schwimmerkammer 107 verschlossen wird. Die Schwimmerkammer 107 ist dadurch gegenüber Atmosphärendruck abgeschlossen.

Zur Erhöhung der Stabilität der Dichtungsplatte 125 weist diese eine Anzahl von Verstärkungsstreben auf. Die Verstärkungsstreben erstrecken sich auf der Außenseite der Dichtungsplatte 125 und verlaufen radial zwischen der Entlüftungsöffnung 103 und einem äußeren Rand der Dichtungsplatte 125.

Die Außenseite der Entlüftungsöffnung 103 wird von einer elastischen Membran 121 abgedeckt. Über die elastische Membran 121 kann die Luft bei einem Überdruck aus dem Entlüftungsventil 100 austreten. Dabei wird der Teller- oder Außenrand der elastischen Membran 121 nach oben gehoben, so dass die austretende Luft durch den Spalt zwischen der Membran 121 und der Dichtungsplatte 125 entweicht. Ist kein Überdruck im Ventilinneren vorhanden, liegt der Außenrand der Membran 121 auf der Dichtungsplatte 125 auf. Dadurch wird das Ventilinnere gegenüber der Außenumgebung abgeschlossen, so dass kein permanenter Luftaustausch mit der Umgebungsluft stattfindet. Hierdurch wird ein zweites Ventil im Inneren des Entlüftungsventils 100 realisiert.

Bei einem Unterdruck ermöglicht die verschließende Membran 121 durch zusätzlich integrierte Luftschlitze eine Öffnung zum Ventilinneren hin. In diesem Fall strömt die Umgebungsluft über die Luftschlitze durch die auf der Dichtungsplatte 125 aufliegende Membran 121 ins Ventilinnere. Die Luftschlitze in der elastischen Membran 121 sind derart gestaltet, dass diese bei ausgeglichenem Druck zwischen dem Ventilinneren und der Umgebung geschlossen sind. Hierdurch wird ein Luftaustausch mit dem Ventilinneren auf ein Minimum reduziert, so dass eine Austrocknung und eine damit verbundene Kristallisation von Harnstoff verhindert werden.

Der Aufbau des Entlüftungsventils 100 ist somit derart gestaltet, dass eine Luftzufuhr über Schlitze in der Membran 121 ebenfalls für einen Unterdruck im Flüssigkeitstank realisiert ist. Hierdurch wird eine zusätzliche Ventilwirkung ermöglicht. Zudem kann ein Eintritt von Verunreinigungen oder Schmutzpartikeln in die Entlüftungsöffnung 103 verhindert werden.

Die elastische Membran 121 ist auf einem Dorn aufgesetzt, der aus der Mitte der Entlüftungsöffnung 103 nach außen hervorsteht. Dadurch kann ein seitliches Verrutschen der elastischen Membran 121 verhindert werden. In einem Flüssigkeitstank, der mit einer wässrigen Harnstofflösung befüllt wird, kann durch die Membran eine Kristallisation von Harnstoff im gesamten Entlüftungsventil verhindert werden. Die Verhinderung der Kristallbildung ermöglicht eine störungsfreie Funktion des Entlüftungsventils 100.

Oberhalb der Dichtungsplatte 125 wird eine Schutzkappe 123 zum weiteren Verhindern eines Eindringens von Schmutzpartikeln in die Entlüftungsöffnung 103 angeordnet. Die Schutzkappe 123 rastet auf der Dichtungsplatte 125 ein und fixiert dabei gleichzeitig die elastische Membran 121.

Die festen Einzelteile aus denen das Entlüftungsventil 100 hergestellt ist, wie beispielsweise das Gehäuseteil 131, der Schwimmerkörper 105, der Führungseinsatz 119, die Strömungsplatte 127, der Dichtungsträger 113, die Dichtungsplatte 125 oder die Schutzkappe 123 sind Formteile aus Kunststoff. Diese können beispielsweise im Spritzgussverfahren aus Polyamid (PA), Polyoxymethylen (POM), Polyolefin oder thermoplastischen Elastomeren auf Olefinbasis (TPO) hergestellt werden. Die Fertigung der Einzelkomponenten des Entlüftungsventils 100 aus diesen Materialien ist besonders vorteilhaft, da hierdurch eine hohe Festigkeit und Stabilität des Entlüftungsventils 100 erreicht wird.

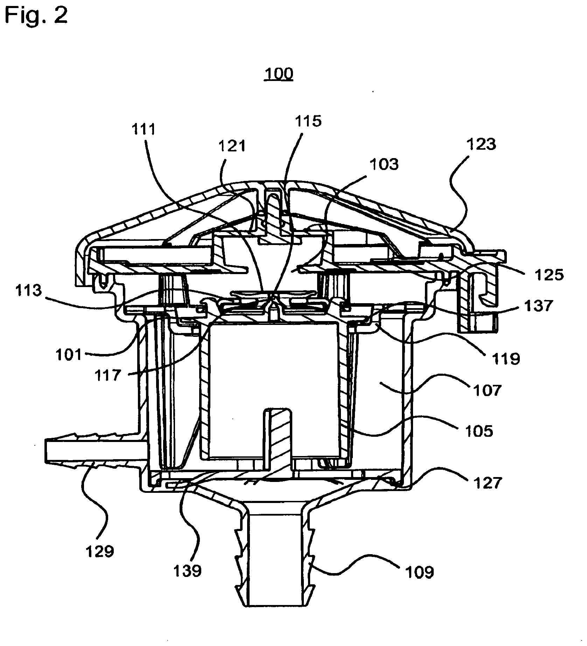

Fig. 2 zeigt eine Querschnittsansicht des Entlüftungsventils 100 mit geöffneter Entlüftungsöffnung 103 in Öffnungsstellung. Der Schwimmer 101 befindet sich in einer unteren Position, so dass die Schwimmerdichtung 111 die Entlüftungsöffnung 103 freigibt und Luft aus der Entlüftungsöffnung 103 entweichen kann. Aufgrund der weiten Öffnung der Entlüftungsöffnung 103 kann die Entlüftung auch mit einer hohen Rate von beispielsweise 40l/min erfolgen. Die aus dem Flüssigkeitstank verdrängte Luft tritt über den Leitungsanschluss 109 in die Schwimmerkammer 107 ein und wird um den Schwimmer 101 herumgeführt, bevor diese dann aus der Entlüftungsöffnung 103 austritt. Somit ist eine Belüftung über die elastische Membran 121 sichergesteilt.

In der Öffnungsstellung liegt der Schwimmer 101 auf dem Führungseinsatz 119 auf. Um ein leichtes Lösen aus der Öffnungsstellung zu ermöglichen, sind auf den Führungseinsatz 119 einzelne Erhebungen 137 als Auflagepunkte für den Schwimmerkörper 105 gebildet. Diese Erhebungen 137 verhindern ein großflächiges Aufliegen des Schwimmerkörpers 105 auf dem Führungseinsatz 119. Durch die punktuelle Auflage auf den Auflagepunkten wird der Vorteil erreicht, dass einem Festfrieren oder Festkristallisieren des Schwimmerkörpers 105 auf dem Führungseinsatz 119 entgegengewirkt wird.

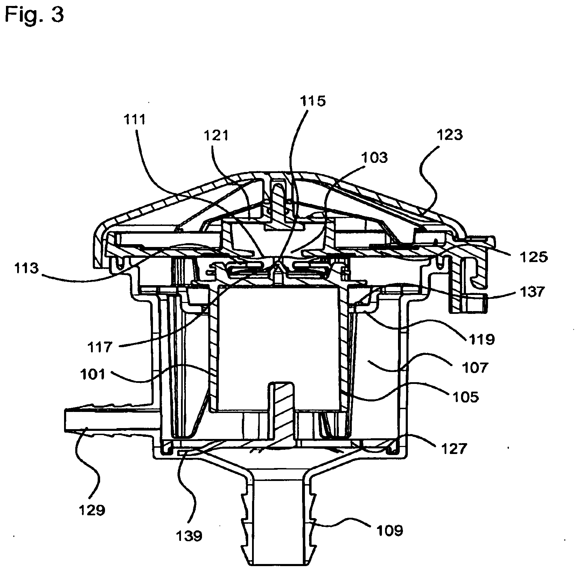

Fig. 3 zeigt eine Querschnittsansicht des Entlüftungsventils 100 mit geschlossener Entlüftungsöffnung 103. Nach einem Eintritt von Flüssigkeit über den Leitungsanschluss 109 erhöht sich der Flüssigkeitspegel in der Schwimmerkammer 107 und der Schwimmer 101 wird in die Schließstellung gehoben und schließt mittels der Schwimmerdichtung 111 die Entlüftungsöffnung 103 gegen den Atmosphärendruck. In diesem Fall kann keine Luft und keine Flüssigkeit aus den Entlüftungsventil 100 austreten.

In der Schließstellung verschließt die auf dem Schwimmerkörper 105 angeordnete Schwimmerdichtung 111 die Entlüftungsöffnung 103. Zusätzlich verschließt der Dorn 117 des Schwimmerkörpers 105 die Dichtungsöffnung 115 der Schwimmerdichtung 111. Die Schwimmerkammer 107 ist nach außen hin abgedichtet und ein Austritt von Flüssigkeit wird verhindert. Dies bewirkt anschließend die Abschaltung oder Beendigung des Tankvorganges und der Flüssigkeitstank ist gefüllt.

Die Strömungsplatte 127 befindet sich unterhalb des Schwimmers 101 und verhindert, dass der eintretende Flüssigkeitsstrahl direkt den Schwimmerkörper 105 trifft. Die Federbeine 139 der Strömungsplatte 127 drücken den Führungseinsatz 119 für das Schwimmerventil an die Dichtungsplatte 125, so dass der Führungseinsatz 119 unverrückbar im Inneren der Schwimmerkammer 107 angeordnet ist und Klappergeräusche verhindert werden.

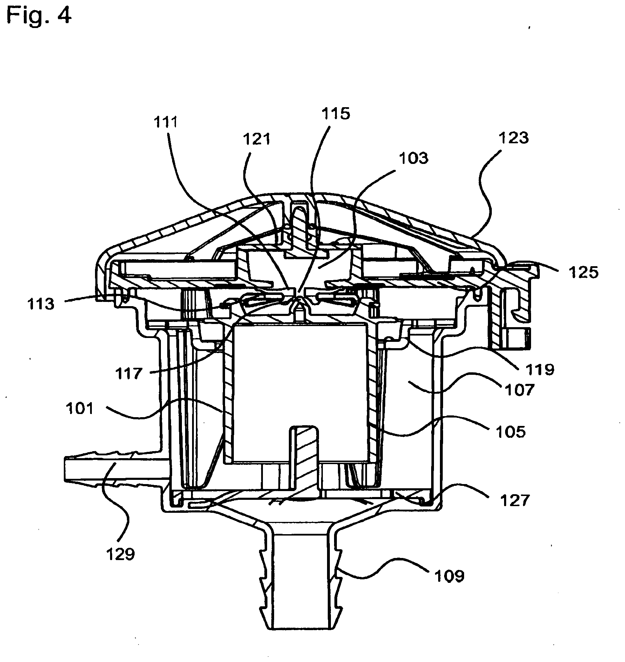

Fig. 4 zeigt eine Querschnittsansicht des Entlüftungsventils 100 mit geschlossener Schwimmerdichtung 111, in der die Dichtungsöffnung 115 in der Schwimmerdichtung 111 freigegeben ist. Nach einem Absinken des Flüssigkeitspegels in der Schwimmerkammer 107 bewegt sich der Schwimmer 101 nach unten. Dabei gibt der Dorn 117 des Schwimmerkörpers 105 zunächst die zentrale Dichtungsöffnung 115 frei, so dass Luft durch die Dichtungsöffnung 115 in das Innere der Schwimmerkammer 107 oder aus der Schwimmerkammer 107 heraus strömen kann. Dadurch wird ein Druckausgleich erzielt, da ansonsten der Schwimmer 101 in der Schließstellung verharren könnte.

Danach fällt bei einem weiteren Absinken des Flüssigkeitspegels in der Schwimmerkammer 107 dann die Schwimmerdichtung 111 von der Entlüftungsöffnung 103 nach unten hin ab, so dass diese freigegeben wird und Luft über die Entlüftungsöffnung 103 und die elastische Membran 121 nach außen strömen kann, beispielsweise bei einem erneuten Betanken des Flüssigkeitstanks. Es findet wieder ein Druckausgleich zwischen dem Flüssigkeitstank und der Atmosphäre statt.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Entlüftungsventil
- 101: Schwimmer
- 103: Entlüftungsöffnung
- 105: Schwimmerkörper
- 107: Schwimmerkammer
- 109: Leitungsanschluss
- 111: Schwimmerdichtung
- 113: Dichtungsträger
- 115: Dichtungsöffnung
- 117: Dorn
- 119: Führungseinsatz
- 121: Membran
- 123: Schutzkappe
- 125: Dichtungsplatte
- 127: Strömungsplatte
- 129: Nebenstutzen
- 131: Gehäuseteil
- 133: Befestigungsarme
- 135: Einsatzbeine
- 137: Erhebung
- 139: Federbeine

## Patentansprüche

1. Entlüftungsventil (100) mit einer Entlüftungsöffnung (103) zum Entlüften eines Flüssigkeitstanks in einem Kraftfahrzeug, mit:
einem Schwimmer (101) in einer Schwimmerkammer (107) zum Verschließen der Entlüftungsöffnung (103), der eine Schwimmerdichtung (111) zum Abdichten der Entlüftungsöffnung (103) umfasst; und
einem Leitungsanschluss (109) zum Zuführen von Flüssigkeit aus dem Flüssigkeitstank zu der Schwimmerkammer (107), wobei
die Schwimmerdichtung (111) eine Dichtungsöffnung (115) zum Durchlassen von Luft aus der Schwimmerkammer (107) und der Schwimmer (101) einen Dorn (117) zum Verschließen der Dichtungsöffnung (115) umfasst,
**dadurch gekennzeichnet, dass**
die Entlüftungsöffnung (103) an einer Austrittseite von einer elastischen Membran (121) mit Luftschlitzen abgedeckt ist,
wobei die elastische Membran (121) als eine kreisförmige elastische Membran (121) ausgebildet ist, welche in der Mitte der Entlüftungsöffnung (103) befestigt ist,
wobei die elastische Membran (121) angeordnet ist, so dass die elastische Membran (121) bei einem Überdruck im Entlüftungsventil (100) einen Luftspalt erzeugt, aus dem die Luft aus dem Entlüftungsventil (100) austreten kann, und
wobei das Entlüftungsventil (1030) eine kreisförmige Dichtungsplatte (125) umfasst, in der die Entlüftungsöffnung (103) zentral angeordnet ist.

2. Entlüftungsventil (100) nach Anspruch 1, wobei der Schwimmer (101) einen becherförmigen Schwimmerkörper (105) umfasst.

3. Entlüftungsventil (100) nach Anspruch 1 oder 2, wobei der Schwimmer (101) einen Dichtungsträger (113) zum Befestigen der Schwimmerdichtung (111) umfasst.

4. Entlüftungsventil (100) nach Anspruch 3, wobei der Dichtungsträger (113) mit einem Bewegungsfreiraum an dem Schwimmer (101) befestigt ist.

5. Entlüftungsventil (100) nach einem der vorangehenden Ansprüche, wobei die Schwimmerkammer (107) einen Führungseinsatz (119) zum Führen des Schwimmers (101) umfasst.

6. Entlüftungsventil (100) nach Anspruch 5, wobei der Führungseinsatz (119) einen Anschlag für den Schwimmer (101) bildet.

7. Entlüftungsventil (100) nach einem der vorangehenden Ansprüche, wobei das Entlüftungsventil (100) eine Schutzkappe (123) zum Verhindern eines Eindringens von Schmutzpartikeln in die Entlüftungsöffnung (103) umfasst.

8. Entlüftungsventil (100) nach einem der vorangehenden Ansprüche, wobei die Schwimmerkammer (107) eine Zylinderform aufweist.

9. Entlüftungsventil (100) nach einem der vorangehenden Ansprüche, wobei das Entlüftungsventil (100) eine Strömungsplatte (127) zum Brechen eines in die Schwimmerkammer (107) eintretenden Flüssigkeitsstrahles umfasst.

10. Entlüftungsventil (100) nach einem der vorangehenden Ansprüche, wobei das Entlüftungsventil (100) einen Nebenstutzen (129) für einen weiteren Luftaustausch umfasst.

## Claims

1. Vent valve (100) with a vent opening (103) for venting a liquid tank in a motor vehicle, with:
a float (101) in a float chamber (107) for closing the vent opening (103), which float comprises a float seal (111) for sealing the vent opening (103); and
a line connection (109) for feeding liquid out of the liquid tank to the float chamber (107), wherein the float seal (111) comprises a seal opening (115) for letting air out of the float chamber (107), and the float (101) comprises a spike (117) for closing the seal opening (115),
**characterized in that**
the vent opening (103) is covered on an outlet side by an elastic diaphragm (121) with air slots,
wherein the elastic diaphragm (121) is designed as a circular elastic diaphragm (121), which is attached in the center of the vent opening (103),
wherein the elastic diaphragm (121) is arranged such that excess pressure in the vent valve (100) causes the elastic diaphragm (121) to create an air gap, via which the air can escape from the vent valve (100), and
wherein the vent valve (100) comprises a circular sealing plate (125) in which the vent opening (103) is arranged centrally.

2. Vent valve (100) according to Claim 1, wherein the float (101) comprises a cup-shaped float body (105).

3. Vent valve (100) according to Claim 1 or 2, wherein the float (101) comprises a seal carrier (113) for fastening the float seal (111).

4. Vent valve (100) according to Claim 3, wherein the seal carrier (113) is fastened to the float (101) with a movement clearance.

5. Vent valve (100) according to one of the preceding claims, wherein the float chamber (107) comprises a guide insert (119) for guiding the float (101).

6. Vent valve (100) according to Claim 5, wherein the guide insert (119) forms a stop for the float (101).

7. Vent valve (100) according to one of the preceding claims, wherein the vent valve (100) comprises a protective cap (123) for preventing dirt particles from penetrating the vent opening (103).

8. Vent valve (100) according to one of the preceding claims, wherein the float chamber (107) has a cylinder shape.

9. Vent valve (100) according to one of the preceding claims, wherein the vent valve (100) comprises a flow plate (127) for breaking up a liquid jet entering the float chamber (107).

10. Vent valve (100) according to one of the preceding claims, wherein the vent valve (100) comprises a secondary connector (129) for a further exchange of air.

## Revendications

1. Soupape de ventilation (100) avec une ouverture de ventilation (103) pour la ventilation d'un réservoir de liquide dans un véhicule automobile, avec :
un flotteur (101) dans une chambre de flotteur (107) pour la fermeture de l'ouverture de ventilation (103), qui comprend un joint de flotteur (111) pour l'étanchéité de l'ouverture de ventilation (103) ; et
un raccord de conduite (109) pour la fourniture de liquide du réservoir de liquide à la chambre de flotteur (107), dans laquelle
le joint de flotteur (111) comprend une ouverture de joint (115) pour le passage d'air hors de la chambre de flotteur (107) et le flotteur (101) comprend un pointeau (117) pour la fermeture de l'ouverture de joint (115),
**caractérisée en ce que**
l'ouverture de ventilation (103) est couverte sur un côté de sortie par une membrane élastique (121) avec des fentes d'air,
dans laquelle la membrane élastique (121) est réalisée en tant que membrane élastique circulaire (121), laquelle est fixée au milieu de l'ouverture de ventilation (103),
dans laquelle la membrane élastique (121) est arrangée, de sorte que la membrane élastique (121) génère un interstice d'air lors d'une surpression dans la soupape de ventilation (100), duquel l'air peut sortir de la soupape de ventilation (100), et
dans laquelle la soupape de ventilation (100) comprend une plaque d'étanchéité circulaire (125), dans laquelle l'ouverture de ventilation (103) est arrangée au centre.

2. Soupape de ventilation (100) selon la revendication 1, dans laquelle le flotteur (101) comprend un corps de flotteur en forme de gobelet (105).

3. Soupape de ventilation (100) selon la revendication 1 ou 2, dans laquelle le flotteur (101) comprend un porte-joint (113) pour la fixation du joint de flotteur (111).

4. Soupape de ventilation (100) selon la revendication 3, dans laquelle le porte-joint (113) est fixé au flotteur (101) avec un espace libre de mouvement.

5. Soupape de ventilation (100) selon l'une quelconque des revendications précédentes, dans laquelle la chambre de flotteur (107) comprend un insert de guidage (119) pour le guidage du flotteur (101).

6. Soupape de ventilation (100) selon la revendication 5, dans laquelle l'insert de guidage (119) forme une butée pour le flotteur (101).

7. Soupape de ventilation (100) selon l'une quelconque des revendications précédentes, dans laquelle la soupape de ventilation (100) comprend une coiffe de protection (123) pour empêcher une pénétration de particules d'encrassement dans l'ouverture de ventilation (103).

8. Soupape de ventilation (100) selon l'une quelconque des revendications précédentes, dans laquelle la chambre de flotteur (107) présente une forme cylindrique.

9. Soupape de ventilation (100) selon l'une quelconque des revendications précédentes, dans laquelle la soupape de ventilation (100) comprend une plaque d'écoulement (127) pour briser un jet de liquide pénétrant dans la chambre de flotteur (107).

10. Soupape de ventilation (100) selon l'une quelconque des revendications précédentes, dans laquelle la soupape de ventilation (100) comprend un raccord secondaire (129) pour un autre échange d'air.
